Europäisches Patentamt

European Patent Office

Office européen des brevets

(11) Veröffentlichungsnummer: **0 019 052**
**B1**

(12) # EUROPÄISCHE PATENTSCHRIFT

(45) Veröffentlichungstag der Patentschrift:
04.01.84

(21) Anmeldenummer: **80101305.3**

(22) Anmeldetag: **13.03.80**

(51) Int. Cl.³: **G 01 N 1/20**, G 01 N 33/44

(54) **Vorrichtung zum Entnehmen von Proben aus zähflüssigen Kunstharzen aus einem Behälter.**

(30) Priorität: **10.05.79 DE 2918768**

(43) Veröffentlichungstag der Anmeldung:
**26.11.80 Patentblatt 80/24**

(45) Bekanntmachung des Hinweises auf die Patenterteilung:
**04.01.84 Patentblatt 84/1**

(84) Benannte Vertragsstaaten:
**AT BE CH FR GB IT LU NL SE**

(56) Entgegenhaltungen:
**DE - A - 1 903 251**
**DE - A - 2 117 627**
**FR - A - 2 250 111**
**FR - A - 2 308 098**
**NL - A - 7 006 663**

(73) Patentinhaber: **RHE Händel Engineering GmbH, Alte
Heerstrasse 34, D-5205 St. Augustin 1, Niederpleis (DE)**

(72) Erfinder: **Händel, Max Dieter, Alte Siegburger
Strasse 12, D-5204 Lohmar 1, Heide (DE)**

(74) Vertreter: **Köhne, Friedrich, Dipl.-Ing.,
Postfach 250265 Lothringer Strasse 81,
D-5000 Köln 1 (DE)**

Vorrichtung zum Entnehmen von Proben aus zähflüssigen Kunstharzen aus einem Behälter

Die Erfindung bezieht sich auf eine Vorrichtung zur Entnahme von Proben aus zähflüssigen Kunstharzen aus einem Behälter während eines Behandlungsvorganges, wobei an den Behälter eine Kreislaufführung für einen kleinen Teilstrom des Behälterinhaltes angeschlossen ist, wobei ferner die Kreislaufführung eine Pumpe und eine der Pumpe in Strömungsrichtung nachgeordnete Probeentnahmevorrichtung als Ventil mit einem von einem Gehäuse umgebenen Durchflussraum für den Teilstrom, ausgebildet ist und wobei an dem Druchflussraum Auslässe für den Zu- und Ablauf des Teilstroms vom bzw. in die Kreislaufführung vorgesehen sind.

In der speziellen Technik zur Herstellung von zähflüssigen Kunstharzen ist es erforderlich, Stoffe in gleichen oder unterschiedlichen Aggregatzuständen unter Druck und/oder Hitze miteinander zu mischen, gewissen Behandlungsvorgängen zu unterwerfen und das Mischgut reagieren zu lassen. Die Behandlungsvorgänge des Mischgutes erfolgen in einem Reaktionskessel, der beheizbar und auf gewünschten Druck einstellbar und mit einem angetriebenen Rührwerk versehen ist.

Bei allen diesen angesprochenen Behandlungsvorgängen wird in der Praxis angestrebt, dass ein Endprodukt erhalten wird, welches über den gesamten Kesselinhalt möglichst gleiche Eigenschaften aufweist, z.B. gleiche stoffliche Zusammensetzung, Viskosität, Säurezahl und dgl. Dieser möglichst homogene Zustand des zu gewinnenden Produktes soll andererseits nach möglichst kurzer Behandlungszeit erreicht werden. In der Praxis können die Aktionszeiten von Kesselcharge zu Kesselcharge unterschiedlich sein und somit auch jeweils andere technische Daten oder Betriebszustände vorliegen. Man ist daher gezwungen, während der Behandlung der zu gewinnenden Stoffe in gewissen Zeitabständen Proben zu entnehmen, damit diese labormässig sehr schnell auf die gewünschten technischen Daten, wie Viskosität, Säurezahl usw. überprüft werden können. Bei der Kunstharzherstellung kommt erschwerend hinzu, dass es sich um zäh bis zähflüssige Stoffe handelt, die bei Normaltemperatur eine Viskosität von etwa 10.000 cp und bei Betriebs- bzw. Behandlungstemperatur von etwa 250° C eine Viskosität von 2 bis 100 cp besitzen. In der Praxis dieses speziellen Fachgebietes werden die Proben in der Weise entnommen, dass direkt am Reaktionskessel eine Auslassvorrichtung in Form eines Hahnes oder Ventiles kurzzeitig geöffnet wird, so dass eine Probe aus dem Reaktionskessel austritt, aufgefangen und untersucht werden kann. Es hat sich gezeigt, dass die so gewonnenen Proben keinen genügend genauen Aufschluss über die erreichten mittleren Eigenschaften des Kesselinhaltes geben, weil die so gewonnenen Proben immer aus einem bestimmten Randbereich des Reaktionskessels kommen, die den Behandlungsvorgang weniger intensiv mitgemacht haben können. Es kommt hinzu, dass die technischen Eigenschaften des Kesselinhaltes nicht nur von aussen nach innen, sondern auch von unten nach oben unterschiedlich sein können. Aus diesen Gründen hat es sich in der Praxis als recht schwierig erwiesen, Proben zu gewinnen, die zuverlässig Auskunft über den Behandlungsgrad des Kesselinhaltes geben. Es kommt hinzu, dass gerade wegen der zähen bzw. zähflüssigen Eigenschaften des Behandlungsgutes bei der Herstellung von Kunstharzen das Öffnen und Schliessen der betreffenden Auslassvorrichtung unmittelbar am Kessel mit sehr erheblichen Schwierigkeiten verbunden ist, was die reine Handhabung betrifft. Vor allem ist auch die Unfallgefahr bei der bisherigen Art der Probeentnahme nicht unerheblich.

Ein Teil dieser Schwierigkeiten, vor allem die Unfallgefahr, kann durch die zu Anfang erläuterte Vorrichtung gemeistert werden, die aus der FR-A-2 250 111 bekannt ist und von welcher bei der Erfindung ausgegangen wird. Trotz dieser zu Anfang erläuterten übereinstimmenden Merkmale arbeitet die bekannte Vorrichtung nach einem anderen Prinzip. Diese Probeentnahmevorrichtung besteht aus einem zylindrischen Behälter, wobei an der Zylinderwandung zwei sich diagonal gegenüberliegende Rohranschlüsse angebracht sind. Der eine Rohranschluss dient zum Zuführen und der andere zum Abführen des Teilstroms. Im Inneren des Behälters, und zwar koaxial zu der Zylinderwandung, ist ein zylindrischer Stempel in seiner Achsrichtung verschiebbar gehalten. Er besitzt eine in Diagonalrichtung der beiden Anschlussrohre verlaufende Bohrung. Der abgezweigte Teilstrom soll nun sowohl aussen um den Kolben herumfliessen, als auch durch diese Bohrung. Zur Entnahme einer Probe der betreffenden Flüssigkeit wird der Kolben soweit nach unten verschoben, bis sich die Bohrung ausserhalb des zylindrischen Behälters befindet, so dass der in der Bohrung vorhandene Teil der Flüssigkeit in einem Aufnahmebehälter abfliessen kann. Bei der bekannten Vorrichtung ist es möglich, durch Probeentnahme den Fortschritt von chemischen Reaktionen in einem Reaktor zu überprüfen, wenn die Probe aus einem verhältnismässig dünnflüssigen Stoff besteht. Bei zähflüssigen Kunstharzen dagegen wird sich die verhältnismässig kleine Bohrung in dem Kolben sofort nach dessen Einwärtsschieben mit Kunstharz füllen. Anschliessend wird aber das zähflüssige Kunstharz beim Durchfluss durch den zylindrischen Behälter den Weg des geringsten Widerstandes gehen, nämlich zu beiden Seiten ausserhalb des Kolbens, so dass die Bohrung selbst nicht in ausreichendem Masse ständig durchspült wird. Zumindest haftet ein Teil des Kunstharzes an der Wandung der Bohrung an, so dass die nach einiger Zeit entnommene Probe nicht repräsentativ für den jeweiligen Zustand des durchfliessenden Materials ist. Ausserdem wird die Probe auch nur schwer aus der Bohrung ausfliessen, wenn der Kolben nach aussen hin verschoben wird. Ferner ergibt sich die Schwierigkeit, dass die Gleitführungen und Dichtungen zwischen Behälter und Kolben leicht verkleben und damit ein ordnungsgemässer Betrieb nicht mehr gewährleistet ist. Schliesslich ist noch von Nachteil, dass das Volumen der Bohrung und damit der Probe immer gleich ist und man keinen Einfluss auf die gerade benötigte Menge der Probe nehmen kann.

Des weiteren ist aus der DE-A-1 903 251 eine Einrichtung zur Entnahme von Milchproben, also eines dünnflüssigen Produktes, aus einer Durchflussleitung, insbesondere für Milchtankwagen, bekannt. Diese Einrichtung weist ein Ventil auf, bei dem der Ventilsitz konisch ausgebildet ist und wobei die Rohrstutzen für den Zu- und Ablauf in der Höhe zueinander versetzt sind. Aufgrund der gesamten Konstruktionen dieses bekannten Ventiles ist bei Anwendung zur Probeentnahme von zähflüssigem Kunstharz nicht nur eine Nesterbildung und damit eine Verfälschung auf der Oberseite des Ventiles, und zwar im Raum zwischen Ventil und Unterkante des unteren Ablaufrohres zu erwarten, sondern auch in dem gesamten Vorrichtungsteil, welcher sich unterhalb des Ventilsitzes befindet.

Der Erfindung liegt demgegenüber die Aufgabe zugrunde, einer Vorrichtung zu schaffen, bei welcher gewährleistet ist, dass der im Kreislauf geführte Teilstrom das Ventil so durchströmt, dass jederzeit eine unverfälschte Probe des Stoffes entnommen werden kann, und zwar in einer beliebigen, gerade benötigten Menge.

Die gestellte Aufgabe wird erfindungsgemäss dadurch gelöst, dass die Auslässe die Form von in der Höhe zueinander versetzten Rohrstutzen haben, die mit der Kreislaufführung verbindbar sind, dass am Boden des Gehäuses ein konischer Ventilsitz eingearbeitet ist, mit welchem ein mittels einer Ventilspindel vertikal verschiebbarer Ventilkegel zusammenarbeitet, und dass der Boden des Gehäuses einen in den Durchflussraum ragenden Rohrstutzen aufweist, welcher den Ventilsitz umgibt und im Bewegungsbereich des Ventilkegels auf dem Umfang mit Durchlassöffnungen versehen ist.

Weitere vorteilhafte Ausgestaltungen der erfindungsgemässen Vorrichtung ergeben sich aus den Unteransprüchen.

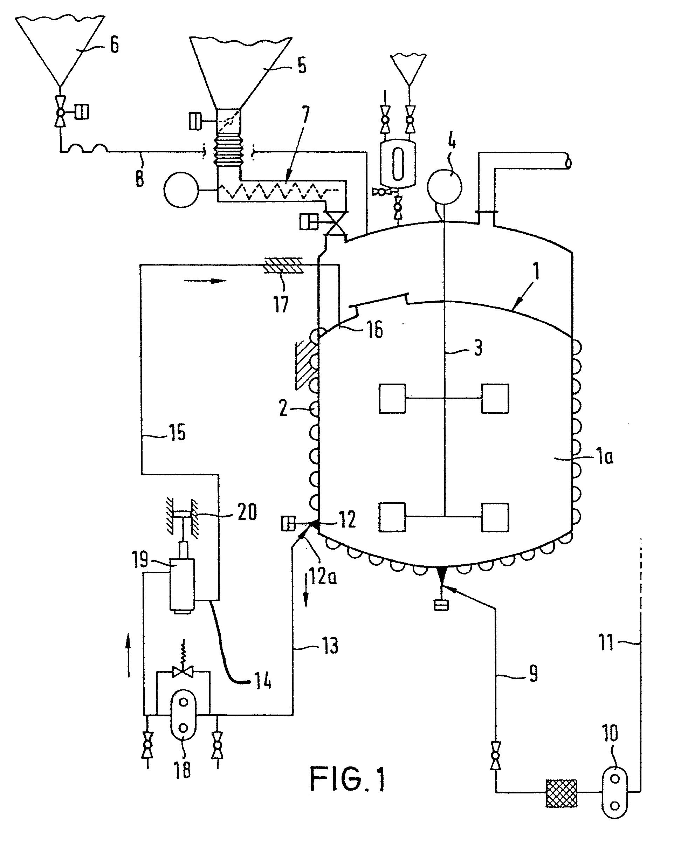

Die Erfindung sei anhand von Zeichnungen nachfolgend näher erläutert. Es zeigen Figur 1 einen Ausschnitt aus einer Gesamtvorrichtung, die zur Herstellung von Kunstharzen dient, worauf sich die Erfindung aber nicht bezieht, und

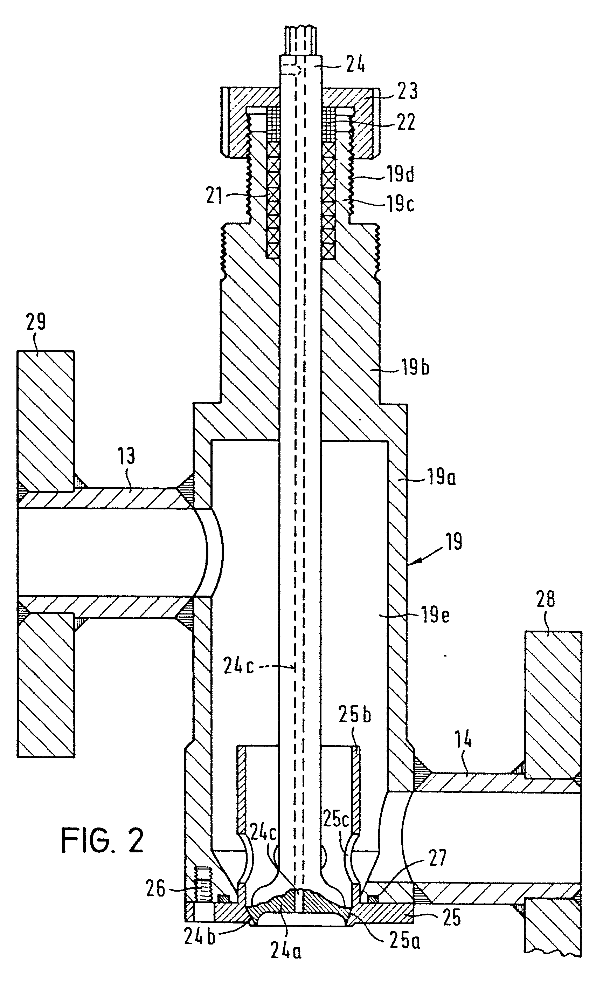

Figur 2 einen Vertikalschnitt durch die erfindungsgemässe Probeentnahmevorrichtung.

Die Gesamtvorrichtung gemäss Figur 1 weist einen Behälter 1 auf, der allseitig geschlossen ist und unter Druck mit einem Behandlungsgut gefüllt ist, welches durch Heizvorrichtungen 2 auf dem Umfang des Behälters auf Betriebstemperatur von etwa 250° gebracht werden kann und welches durch ein Rührwerk 3, das durch einen Antrieb 4 in Umdrehung versetzt wird, gemischt wird. Dieser Reaktionsbehälter wird mittels Aufgabetrichtern oder -behältern 5, 6, mit Feststoffen und/oder flüssigen Komponenten bzw. Grundstoffen über Fördervorrichtungen 7 bzw. Leitungen 8 in bekannter Weise beschickt. Das behandelte Produkt entsprechend dem Behälterinhalt 1 a kann über Leitungen 9, 11 mittels Pumpe abgezogen und in bekannter Weise weiterbehandelt werden.

An den Reaktionsbehälter 1 ist ein Kreislauf angeschlossen, der ausschliesslich der Entnahme von Stoffproben aus dem Behälter dient. Mit Hilfe dieses Kreislaufes wird ein kleiner Teilstrom des Behälterinhaltes 1 a aus dem Behälter 1 abgezogen und anschliessend dem Behälter wieder zugeführt. Das Entnehmen der Stoffproben erfolgt an diesem Kreislauf, und zwar an einer leicht zugänglichen und geeigneten Stelle. Die Kreislaufführung des Teilstroms wird kontinuierlich betrieben, während die Probeentnahme wiederholt in angemessenen Zeitabständen vorgenommen wird. Diese Zeitabstände können beispielsweise etwa 7 bis 15 Minuten betragen, je nach Gegebenheit aber auch wesentlich grösser sein. Die abgezogenen Proben können dann labormässig auf ihre technischen Werte, z.B. Säurezahl, Viskosität und dgl., untersucht und Rückschlüsse gezogen werden.

Die Kreislaufführung ist derart an den Behälter 1 angeschlossen, dass der Teilstrom an einer unteren Stelle 12 des Behälters abgezogen und an einer oberen Stelle 16 dem Behälter wieder zugeführt wird. Der Kreislauf wird von Rohrleitungen 13, 14, 15 gebildet, wobei an der Anschlussstelle 12 ein pneumatisch betätigtes Ventil 12 a vorgesehen ist. Des weiteren ist in dem Kreislauf an einer geeigneten Stelle ein Probennehmerventil 19 eingeschaltet, und zwar in der Kreislaufführung hinter einer Pumpe 18. Die Rohrleitung selbst ist mit einer Wärmeisolierung 17 ausgestattet.

Figur 2 veranschaulicht ein Ausführungsbeispiel eines Probenehmerventils 19, dessen Konstruktion den wesentlichen Vorteil mit sich bringt, dass eine schnelle und genaue Bedienung bzw. Handhabung möglich ist und dass auch bei Proben von zähem bis zähflüssigem Material eine praktisch tropfweise Probeentnahme und eine genaue Dosierbarkeit möglich ist. Die Topffreiheit wird im wesentlichen durch die Entlüftungsbohrung 24 c in der nachfolgend beschriebenen Ventilspindel 24 bewirkt.

Das Probenehmerventil 19 weist ein im wesentlichen zylindrisches Gehäuse 19 a mit einem Durchflussraum 19 e für den Teilstrom auf. An das Gehäuse ist ein Zulauf 13 und ein Ablauf 14 angeschlossen, und zwar sind Zu- und Ablauf am Gehäuse 19 a in der Höhe versetzt zueinander angeordnet, wie dies Figur 2 verdeutlicht. Hierdurch wird ein guter Durchfluss gewährleistet und Nesterbildung innerhalb des Durchflussraumes vermieden. Zu- und Ablauf 13, 14 bestehen im wesentlichen aus angeschweissten Rohrstutzen und können mittels Flanschen 28, 29 an die Rohre des Kreislaufs angeschlossen werden.

Im Boden 25 des Gehäuses ist ein konischer Ventilsitz 25 a eingearbeitet, mit welchem ein Ventilkegel 24 a zusammenarbeitet, der sich am unteren Ende einer Ventilspindel 24 befindet, die ihrerseits mitsamt dem Ventilkegel vertikal verschiebbar gelagert ist, und zwar in dem oberen Teil 19 b des Ventilgehäuses. In diesem oberen Teil sind Packungs- und Druckringe 21, 22 übereinander angeordnet, um eine druckdichte Führung der Ventilspindel 24 zu erreichen. Am oberen Ende der Ventilspindel greift eine Betätigungsvorrichtung 20 (Figur 1) an, die vorteilhafterweise pneumatisch arbeitend ausgebildet ist, weil ein derartiger pneumatischer Antrieb ein schnelles und sicheres Öffnen und Schliessen der Ventilspindel mit dem Ventilkegel gestattet, so dass ein genaues mengenmässiges Dosieren der zu entnehmenden Proben möglich ist. Prinzipiell kann aber auch anstelle des pneumatischen Antriebes ggf. ein elektrisch gesteuerter Antrieb oder schliesslich auch ein einfacher Handantrieb vorgesehen sein. Die besondere Ausgestaltung des konischen Ventilsitzes mit Verjüngung nach unten und nach innen trägt ebenfalls dazu bei, dass ein Nachtropfen nach dem Schliessen des Ventiles verhindert wird. Der Boden 25 des Gehäuses 19 a ist als Platte ausgebildet, die innerhalb des Ventilsitzes eine Ausgussöffnung freigibt und die mit Hilfe von auf dem Umfang verteilten Schrauben 26 unter Zwischenschaltung eines O-Ringes 27 befestigt ist.

Der Boden 25 besitzt einen in das Gehäuseinnere ragenden Rohrstutzen 25 b, welcher den Ventilsitz 25 a umgibt und im Bewegungsbereich des Ventilkegels 24 a auf dem Umfang mit Durchlassöffnungen 25 c versehen ist. Hierdurch wird eine Beruhigungszone im unteren Teil des Durchflussraumes 19a geschaffen und gleichzeitig eine Gleichrichtung des Teilstroms erreicht. Es sei schliesslich noch bemerkt, dass die beschriebenen Packungs-_und Druckringe 21, 22 von einer sich an das obere Gehäuseteil 19 b anschliessenden Gewindebüchse 19 c umgeben sind, auf deren Aussengewinde 19 d eine Überwurfmutter nachstellbar aufgeschraubt ist.

## Patentansprüche

1. Vorrichtung zur Entnahme von Proben aus zähflüssigen Kunstharzen aus einem Behälter (1) während eines Behandlungsvorganges, wobei an den Behälter eine Kreislaufführung (13, 14, 15) für einen kleinen Teilstrom des Behälterinhaltes angeschlossen ist, wobei ferner die Kreislaufführung eine Pumpe und eine der Pumpe in Strömungsrichtung nachgeordnete Probeentnahmevorrichtung aufweist, wobei ausserdem die Probeentnahmevorrichtung als Ventil (19) mit einem von einem Gehäuse (19 a) umgebenen Durchflussraum (19 e) für den Teilstrom ausgebildet ist und wobei an dem Durchflussraum Auslässe (13, 14) für den Zu- und Ablauf des Teilstroms vom bzw. in die Kreislaufführung vorgesehen sind, dadurch gekennzeichnet, dass die Auslässe (13, 14) die Form von in der Höhe zueinander versetzten Rohrstutzen haben, die mit der Kreislaufführung (13, 14, 15) verbindbar sind, dass am Boden (25) des Gehäuses (19 a) ein konischer Ventilsitz (25 a) eingearbeitet ist, mit welchem ein mittels einer Ventilspindel (24) vertikal verschiebbarer Ventilkegel (24 a) zusammenarbeitet, und dass der Boden (25) des Gehäuses (19 a) einen in den Durchflussraum ragenden Rohrstutzen (25 b) aufweist, welcher den Ventilsitz (25 a) umgibt und im Bewegungsbereich des Ventilkegels (24 a) auf dem Umfang mit Durchlassöffnungen (25 c) versehen ist.

2. Vorrichtung nach Anspruch 1, dadurch gekennzeichnet, dass die Ventilspindel (24) mit einer Entlüftungsbohrung (24 c) versehen ist.

3. Vorrichtung nach Anspruch 1 oder 2, dadurch gekennzeichnet, dass der Boden (25) des Gehäuses (19 a) unter Zwischenschaltung eines O-Ringes (27) am unteren Ende des Gehäuses angeschraubt ist.

4. Vorrichtung nach einem der vorhergehenden Ansprüche, dadurch gekennzeichnet, dass die Ventilspindel (24) im oberen Teil (19b) des Gehäuses (19 a) mittels Packungs- und Druckringen (21, 22) druckdicht geführt ist, und dass am äusseren Ende der Ventilspindel (24) eine Betätigungsvorrichtung (20), vorzugsweise eine pneumatische Vorrichtung, angreift.

## Claims

1. Apparatus for taking samples of semifluid synthetic resins from a vessel (1) during process treatment, whereby a circuit system (13, 14, 15) for a partial flow is connected to the vessel, whereby further the circuit system has a pump and a sample taking device, which is on the discharge side of the pump, whereby further the sample tanking device is made as a valve (19) with a chamber (19e) surrounded by a casing (19a), suitable for a partial flow and whereby the chamber has openings (13, 14) for charging and discharging of the partial flow from or to the circuit, thus characterizes that the outlets (13, 14) have the form of pipe nozzles, displaced to each other in heigth, which can be connected with the circulation system (13, 14, 15), that the bottom (25) of the casing (19a) has concial valve seat (25a), with which by means of a valve spindle (24) a vertical movable valve cone (24a) works together, and that the bottom (25) of the casing (19a) has a nozzle (25b) extending into the chamber, which surrounds the valve seat (25a) and has openings (25c) at its circumference within the lifting space of valve cone (24a)

2. Apparatus according to claim 1, thus characterized, that the valve spindel (24) has a vent borehole (24c).

3. Apparatus according to claim 1 or 2, thus characterized, that the bottom (25) of the casing (19a) is fixed by screwing at the lower part of the casing, using an O-ring (27) as sealing.

4. Apparatus according to one of the aforementioned claims, thus characterized, that the valve spindle (24) at the upper part (19b) of the casing (19a) by means of packing and stuffing rings (21, 22) is sliding pressure-tigth and that at the extreme end of the spindle (24) an actuating mechanism (20) is connected to, which favourable is pneumatically operated.

**Revendications:**

Dispositif pour la prise d'échantillons des résines synthétiques visqueuses d'un récipient (1) pendant un procédé de traitement, le récipient étant équipé d'un guidage de circulation (13, 14, 15) pour un petit courant partiel, le guidage de circulation étant équipé d'une pompe et d'un dispositif pour la prise d'échantillons installé en direction de circulation après la pompe, qui est réalisé comme soupape (19) avec une cuve de circulation (19 e) à cage (19 a) pour le courant partiel, la cuve de circulation étant équipée des sorties (13, 14) pour alimentation et évacuation du courant partiel au ou du guidage de circulation caractérisé en ce que les sorties (13, 14) ont la forme des tubulures déplacées en hauteur l'une à l'autre, qui peuvent être reliées au guidage de circulation (13, 14, 15), que le fond (25) de la cage (19 a) est équipé d'un siège conique, qui travaille en dépendance d'un cône de soupape (24 a), ce dernier étant déplaçable verticalement à l'aide d'une tige de soupape (24) et que le fond (25) de la cage (19 a) est équipé d'une tubulure (25 b), qui s'élève dans la cuve de circulation, cerne le siège de soupape et qui est équipé des ouvertures de passage (25 c) à la circonférence dans la portée de déplacement du cône de soupape (24 a).

2. Dispositif selon la revendication 1, caractérisé en ce que la tige de soupape (24) est équipée d'un perçage d'aération (24 c).

3. Dispositif selon l'une des revendications 1 ou 2, caractérisé en ce que le fond (25) de la cage (19 a) est vissé à la partie inférieure de la cage avec insertion d'une bague O (27).

4. Dispositif selon une des revendications précédentes, caractérisé en ce que la tige de soupape (24) dans la partie supérieure (19 b) de la cage (19 a) est guidée étanche à la pression à l'aide des bagues d'étoupage et des cônes de serrage (21, 22) et que au bout supérieur de la tige de soupape (24) un dispositif de commande (20) de préférence pneumatique, se met en action.

FIG.1

FIG. 2